(19) **Europäisches Patentamt / European Patent Office / Office européen des brevets**

(11) **EP 4 307 051 B1**

(12) **FASCICULE DE BREVET EUROPEEN**

(45) Date de publication et mention de la délivrance du brevet:
**18.02.2026 Bulletin 2026/08**

(21) Numéro de dépôt: **22209438.5**

(22) Date de dépôt: **24.11.2022**

(51) Classification Internationale des Brevets (IPC):
**G03H 1/00** *(2006.01)*    **G03H 1/04** *(2006.01)*
**G03H 1/08** *(2006.01)*    G01N 15/02 *(2024.01)*
G01N 15/14 *(2024.01)*    G01N 15/10 *(2024.01)*
G06T 7/00 *(2017.01)*    G06V 10/24 *(2022.01)*
G06T 5/00 *(2024.01)*    G02B 21/00 *(2006.01)*
G01N 15/0227 *(2024.01)*    G01N 15/1434 *(2024.01)*
G01N 15/01 *(2024.01)*    G02B 21/14 *(2006.01)*
G02B 21/36 *(2006.01)*

(52) Classification Coopérative des Brevets (CPC):
**G03H 1/0866; G01N 15/01; G01N 15/0227;**
**G01N 15/1012; G01N 15/1434; G03H 1/0808;**
G01N 2015/0233; G01N 2015/0294;
G01N 2015/1014; G01N 2015/144;
G01N 2015/1454; G01N 2015/1493;
G01N 2015/1497; G02B 21/14; G02B 21/367;
(Cont.)

(54) **PROCEDE ET SYSTEME DE CARACTERISATION DE MICROORGANISMES PAR MICROSCOPIE HOLOGRAPHIQUE NUMERIQUE**

VERFAHREN UND SYSTEM ZUR CHARAKTERISIERUNG VON MIKROORGANISMEN MITTELS DIGITALER HOLOGRAPHISCHER MIKROSKOPIE

METHOD AND SYSTEM FOR CHARACTERIZING MICROORGANISMS BY DIGITAL HOLOGRAPHIC MICROSCOPY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **11.07.2022 EP 22184039**

(43) Date de publication de la demande:
**17.01.2024 Bulletin 2024/03**

(73) Titulaires:
- **BIOMERIEUX**
  **69280 Marcy-L'Etoile (FR)**
- **Bioaster**
  **69007 Lyon (FR)**
- **Université Jean Monnet Saint-Étienne**
  **42100 Saint-Étienne (FR)**
- **Centre National de la Recherche Scientifique (CNRS)**
  **75016 Paris (FR)**

(72) Inventeurs:
- **BRAULT, Dylan**
  **37380 MONNAIE (FR)**
- **FOURNIER, Corinne**
  **42000 SAINT ETIENNE (FR)**
- **OLIVIER, Thomas**
  **42000 SAINT ETIENNE (FR)**
- **FAURE, Nicolas**
  **38100 GRENOBLE (FR)**

(74) Mandataire: **Regimbeau**
  **20, rue de Chazelles**
  **75847 Paris Cedex 17 (FR)**

(56) Documents cités:

- **OLIVIER THOMAS ET AL: "Effects of some model approximations in the reconstructions of digital in-line holograms: simulations, experiments on calibrated objects and model refinement assessment", PROCEEDINGS OF THE SPIE, SPIE, US, vol. 12136, 20 May 2022 (2022-05-20), pages 1213603 - 1213603, XP060158321, ISSN: 0277-786X, ISBN: 978-1-5106-5738-0, DOI: 10.1117/12.2621668**

- **KUS ARKADIUSZ ET AL: "Active limited-angle tomographic phase microscope", JOURNAL OF BIOMEDICAL OPTICS, SPIE, 1000 20TH ST. BELLINGHAM WA 98225-6705 USA, vol. 20, no. 11, 1 November 2015 (2015-11-01), pages 111216, XP060071837, ISSN: 1083-3668, [retrieved on 20150911], DOI: 10.1117/1.JBO.20.11.111216**

(52) Classification Coopérative des Brevets (CPC):
(Cont.)G03H 1/0443; G03H 2001/005; G03H 2001/0447; G03H 2001/0883; G03H 2210/55

**Description**

**DOMAINE TECHNIQUE**

La présente invention concerne le domaine du diagnostic in vitro, en particulier la caractérisation de micro-organismes, en particulier des bactéries, des levures et des champignons, au moyen de la microscopie holographique numérique en ligne.

L'invention trouve une application avantageuse dans la détermination du gram de bactérie, connaitre leurs morphologies ou pour savoir l'état métabolique de microorganismes suite à l'application d'un agent antimicrobien.

**ART ANTERIEUR**

L'observation de microorganismes dans un échantillon biologique est usuellement réalisé au moyen d'une microscopie optique couleur au focus avec une source de lumière incohérente de type Köhler.

Toutefois, plusieurs difficultés se posent. Par exemple dans le cadre du diagnostic in vitro microbien, les objets à imager dans une surface d'intérêt sont typiquement de l'ordre du micromètre, ce qui nécessite une imagerie microscopique à fort grossissement et requiert une expertise importante tant pour la préparation de l'échantillon, l'acquisition des images (sélection de la zone d'intérêt, focalisation), que l'interprétation de l'image (reconnaissance des objets dans le contexte d'échantillon complexe décrit précédemment).

La microscopie holographique numérique ou DHM (Digital Holographie Microscopy) est une technique d'imagerie permettant de s'affranchir des contraintes de profondeur de champ de la microscopie optique classique en acquérant des images défocalisées. Schématiquement, elle consiste à enregistrer une figure d'interférence, usuellement appelé « hologramme », formée par l'interférence entre les ondes lumineuses diffractées par l'objet observé et une onde incidente de référence présentant une cohérence spatiale. La microscopie DHM permet une reconstruction informatique de la phase, ce que ne permet pas l'imagerie microscopique focalisée, ainsi que la reconstruction numérique d'une image des objets observés dans différents plans parallèles au plan du capteur d'image. En outre, l'acquisition d'image étant défocalisée, la microscopie DHM permet de s'affranchir de la nécessité d'utiliser une platine précise, et donc coûteuse, pour le déplacement de système optique et/ou de l'échantillon le long de l'axe optique.

Cette technique est décrite dans l'article de revue de Myung K.Kim intitulé « Principles and techniques of digital holographic microscopy» publié dans SPIE Reviews Vol. 1, N°1, Janvier 2010, l'article de N. Wu et al. intitulé « Three-dimensional identification of microorganisms using a digital holographic microscope» publié dans Computational and Mathematical Methods in Medicine, Vol. 2013 , art. N° ID 162105, l'article l'article de Ahmed El Mallahi intitulé « Automated threedimensional detection and classification of living organisms using digital holography microscopy with partial spatial coherent source: application to monitoring of drinking water resources » publié dans Applied Optics, Vol. 52 N° 1, Janvier 2013, les demande de brevet européen EP 3 252 455 et français FR 3 111 998. L'article de Soulez, F., Denis, L., Fournier, C., Thiébaut, É. & Goepfert, C. « Inverse-problem approach for particle digital holography: accurate location based on local optimization ». JOSA A 24, 1164-1171 (2007) et l'article de Soulez, F., Denis, L., Thiébaut, É., Fournier, C. & Goepfert, C. « Inverse problem approach in particle digital holography: out-of-field particle detection made possible ». JOSA A 24, 3708-3716 (2007) décrivent quant à eux la reconstruction 3D des objets observés ayant donnés lieu aux figures d'interférence.

Si la microscopie DHM, par son acquisition d'image défocalisées des microorganismes à observer et les capacités informatiques de reconstruction associées, permet un emploi simplifié des microscopes, un certain nombre de difficultés demeurent :

- en raison de la nature de l'échantillon observé. En particulier un échantillon biologique issu d'une coloration de Gram, étalé sur une lame de microscope observé par DHM, est un milieu complexe dense, hétérogène, coloré, comprenant des objets microscopiques (e.g. bactéries, levures, champignons) souvent très peu contrastés colorimétriquement, qu'il s'agit de détecter et de caractériser finement pour réaliser un diagnostic in vitro.
- les images reconstruites par certains procédés numériques standard, telle la propagation de Rayleigh-Sommerfeld, présentent des artefacts appelés images jumelles, qui sont la contrepartie du gain de l'information de phase. D'autres procédés, basés sur des approches dites inverses telle que décrite dans les articles de Soulez, F. et al. mentionnés ci-dessus, n'ont pas ces inconvénients mais nécessitent de pouvoir faire des hypothèses sur la structure de l'objet imagé, par exemple sa planéité ou sa régularité.

Quelle que soit l'approche de reconstruction considérée, la reconstruction va également être dégradée par les aberrations optiques du système d'imagerie DHM, en particulier les aberrations géométriques et colorimétriques. Ces aberrations ajoutent des artefacts à l'image acquise, ce qui complexifie l'analyse et le traitement de cette dernière déjà complexe. Ces artefacts sont également présents dans le cadre de l'imagerie microscopique au focus, mais sont particulièrement gênants dans le cadre de la microscopie holographique, car celle-ci travaille en général hors focus, dans un domaine où les objectifs ne sont pas toujours optimisés, et de surcroît à un défocus variable, avec des aberrations pouvant changer d'une acquisition à l'autre. Ainsi, une caractérisation des aberrations a priori sur une mire séparée, comme cela est souvent réalisé en microscopie, risque de devenir inopérante sur une autre image.

Une correction des aberrations optiques d'un système DHM a été proposé dans l'article Zheng, G., Ou, X., Horstmeyer, R. & Yang, C. « Characterization of spatially varying aberrations for wide field-of-view microscopy ». Opt. Express 21, 15131-15143 (2013). Toutefois cette correction repose sur une hypothèse qu'il existe un point de référence dans l'image où il n'existe aucune aberration, ce qui est une hypothèse forte et souvent fausse, menant à une correction relative (au point de référence) et non Les articles "Effects of some model approximations in the reconstructions of digital in-line holograms: simulations, experiments on calibrated objects and model refinement assessment" (Olivier et al., Proc. of SPIE, Vol.12136) ainsi que "Active limited-angle tomographic phase microscope" (Kus et al., Journal of Biomedical Optics, Vol.20(11), Nov. 2025) constituent des articles permettant de comprendre l'invention.

EXPOSE DE L'INVENTION

Le but de l'invention est de proposer un procédé et un système de caractérisation de microorganismes à l'aide de la technologie DHM corrigeant les aberrations de cette dernière.

A cet effet, l'invention a pour objet un procédé de caractérisation de microorganismes présents dans un échantillon tel que selon la revendication indépendante 1. L'invention a aussi pour objet un système de caractérisation de microorganismes présents dans un échantillon biologique tel que selon la revendication indépendante 16, et un produit programme d'ordinateur tel que selon la revendication 18.

En d'autres termes, l'invention se propose de corriger le modèle de propagation, ou « propagateur », utilisé pour la reconstruction de l'image focalisée des aberrations du système d'illumination et d'acquisition de l'image sur les figures d'interférence. Comme cela est connu en soi, les propagateurs, comme par exemple les propagateurs de Lorenz-Mie et de Rayleigh-Sommerfeld pour les plus connus, sont basés sur des hypothèses simplificatrices importantes, notamment la perfection des sources lumineuses (e.g. source parfaitement cohérente dans le cadre du DHM), un système d'acquisition sans défaut, ou encore un milieu de propagation des fronts d'onde homogène sans saut d'indice de réfraction. Ces hypothèses sont importantes car elles donnent naissance à des applications industrielles comme la microscopie DHM en raison des relations explicites qui en découlent, relations qui sont manipulables informatiquement. Leur impact sur la reconstruction de l'image focalisée peut cependant être très important sur les performances finales. Plutôt que de rechercher à travailler sur les hypothèses pour définir de nouvelles équations pour le propagateur lui-même, l'invention se propose, grâce à l'ajout d'objets de calibration dans le champ de vision du système d'acquisition DHM, de calculer une fonction de correction qui, lorsqu'elle est conjuguée au propagateur, rétablit dans une certaine mesure la réalité des imperfections de l'application industrielle qui voit ses performances fortement augmentées. Ces objets sont utilisés pour la caractérisation des aberrations, en particulier les aberrations géométriques. Cette caractérisation est réalisée en ajustant aux données, sur certaines zones particulières de l'image, un modèle « direct » de formation d'image intégrant les caractéristiques de l'objet (en particulier position, taille, indice, éventuellement forme) et celles du système optique (en particulier aberrations géométriques). Il est ainsi avantageux d'utiliser des objets pour lesquels on dispose d'un modèle direct relativement simple, par exemple des sphères d'indice homogène (billes), avec le modèle de Lorenz-Mie. Comme cela sera décrit ci-après, l'emploi de modèle direct permet de combiner, dans un seul modèle, la diffusion de lumière par l'objet de calibration (par exemple un modèle de Lorentz- Mie), son interaction avec le faisceau incident, et les aberrations. Ces aberrations, une fois caractérisées, sont réinjectées dans le modèle de formation de l'image des microorganismes observés, ce qui permet au bout du compte de reconstruire une image (comportant un module et une phase) au focus corrigée, donc une reconstruction plus fine, moins entachée d'artefacts. Une fois l'image reconstruite au focus corrigée des aberrations estimées, celle-ci est interprétable soit directement par un opérateur humain, soit par des procédés d'analyse automatique du type machine learning.

**BREVE DESCRIPTION DES FIGURES**

L'invention sera mieux comprise à la lecture de la description qui suit, donnée uniquement à titre d'exemple, et réalisée en relation avec les dessins annexés, dans lesquels :

-    la **figure 1** est une vue en coupe schématique d'un système d'acquisition de microscopie holographique numérique ;
-    la **figure 2** est une vue en coupe schématique d'une lame de Gram observée par le système de la figure 1 dans une configuration en immersion dans de l'huile ;
-    la **figure 3** est un organigramme d'un procédé selon l'invention appliqué à la détection du Gram de microorganismes présents dans un échantillon biologique ;
-    la **figure 4** illustre l'impact d'aberrations sur les figures d'interférence produites par le système de la figure 1 ;

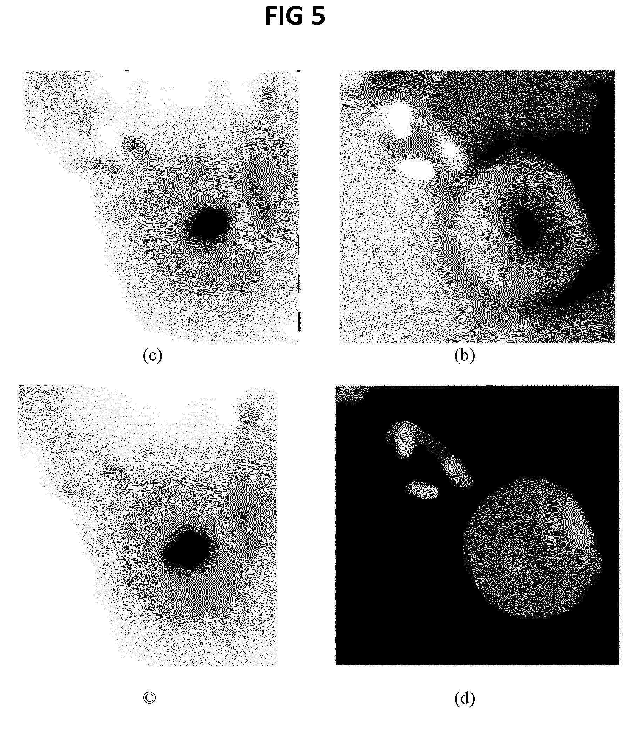

- le **figure 5** illustre des amplitude (colonne de gauche) et phase (colonne de droite) reconstruite sans correction des aberrations (ligne du haut) et avec correction des aberrations (ligne du bas) ;

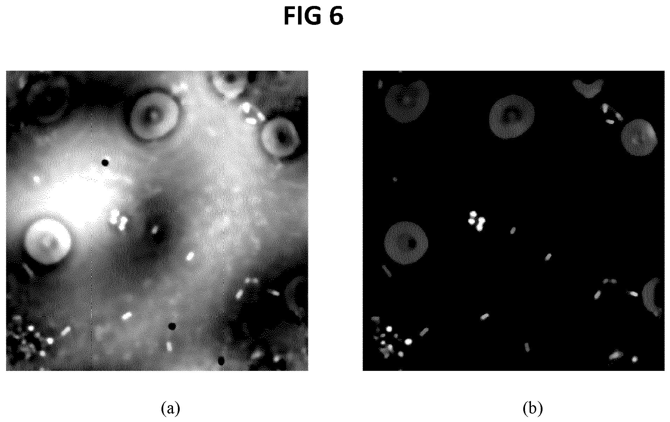

- la **figure 6** illustre une image de phase reconstruite focalisée sans correction des aberrations (image de gauche) et avec correction des aberrations (image de droite).

## DESCRIPTION DETAILLEE DE L'INVENTION

Il va à présent être décrit un procédé et un système selon l'invention, appliqué à la détermination du Gram de bactéries présentes dans un échantillon biologique prélevé sur un patient.

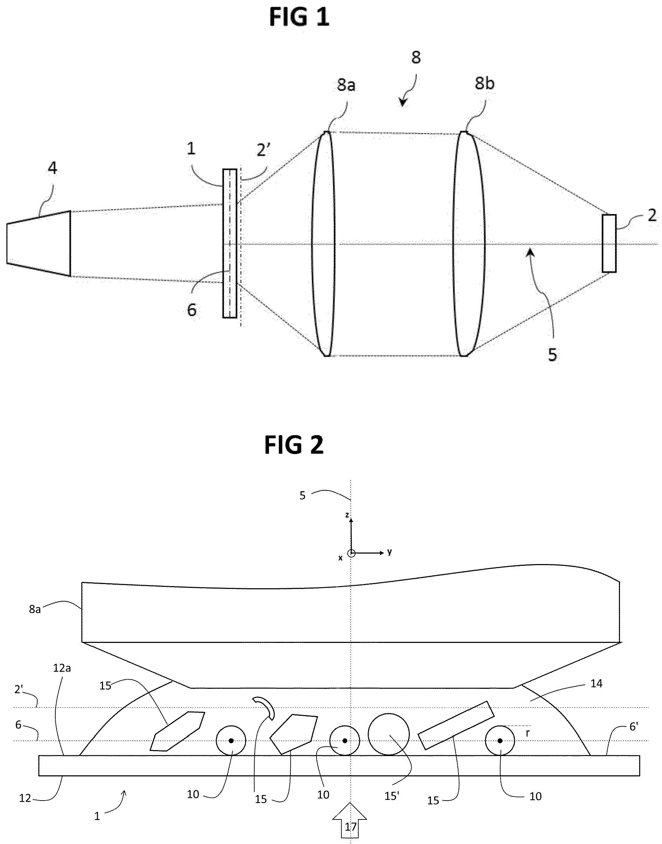

La figure 1 représente schématiquement un système d'imagerie, qui est ici un système d'imagerie holographique en ligne pour imager un échantillon 1 au moyen d'un capteur d'images numérique 2, placé dans un plan image du système d'imagerie holographique. Le système d'imagerie est qualifié de système d'imagerie holographique en ce qu'il est capable d'acquérir des images holographiques, mais ce même système d'imagerie pourrait également acquérir des images non holographiques. Un axe optique 5, libellé axe « z », relie l'échantillon 1 et le capteur d'images 2. Cet axe optique 5 est montré ici rectiligne, mais pourrait être plus complexe, en fonction des configurations. Une source lumineuse 4 est configurée pour illuminer l'échantillon 1 dans le champ de vue (ou « field-of-view ») du système d'imagerie holographique au moyen d'un faisceau de lumière d'illumination suffisamment cohérente pour l'acquisition d'un hologramme, c'est-à-dire cohérente ou partiellement cohérente. La lumière d'illumination présente les caractéristiques conventionnelles pour l'imagerie holographique, sans contraintes additionnelle particulière. La lumière d'illumination peut ainsi être monochromatique (par exemple avec une longueur d'onde autour de 637,2 nm) ou possiblement être composée de plusieurs longueurs d'ondes, par exemple utilisées l'une après l'autre. Le système d'imagerie peut comprendre un ensemble d'organes optiques 8 sur le chemin lumineux entre l'échantillon 1 et le capteur d'images 2. Dans l'exemple illustré, le système d'imagerie holographique est muni d'un objectif de microscope 8a et d'une lentille de tube 8b, disposés entre l'échantillon 1 et le capteur d'images numérique 2. Un organe optique tel que l'objectif de microscope 8a est cependant optionnel, l'invention n'étant pas limitée à la microscopie holographique avec lentille ou à un ensemble d'organes optiques particulier. L'arrangement décrit ici est bien entendu un exemple non limitatif. Tout système d'imagerie holographique peut être utilisé, en ligne ou non, avec ou sans objectif de microscope, etc. En effet, le procédé repose sur l'exploitation d'une image holographique acquise par un système d'imagerie. Ainsi, dès lors qu'un système d'imagerie peut acquérir une image holographique dans laquelle apparaissent les figures d'interférence, ce système d'imagerie convient à la mise en œuvre du procédé. Le système d'imagerie comprend également un système automatisé de traitement de données, non représenté, comprenant au moins un processeur, une mémoire, et qui est configuré pour recevoir au moins une image holographique du capteur d'images 2 et pour traiter cette image holographique selon un procédé selon l'invention. Notamment, le système informatisé, par exemple un ordinateur personnel, comprend une mémoire informatique permanente dans laquelle est mémorisé l'ensemble des instructions lisibles par ordinateur pour la mise en œuvre des étapes de calcul décrites ci-après.

En se référant à la figure 2, l'échantillon 1 comprend la surface d'intérêt 6 qu'il est souhaité imager. La surface d'intérêt 6 peut être plane dans le plus simple des cas, ou être courbe. La surface d'intérêt 6 peut s'étendre dans un plan perpendiculaire à l'axe optique 5, ou bien présenter une inclinaison (souvent désignée sous le terme anglais de "tilt") par rapport à un plan perpendiculaire à l'axe optique 5. On désigne par position de la surface d'intérêt 6 la disposition spatiale de la surface d'intérêt 6, incluant sa localisation et son éventuelle inclinaison, dans le système d'imagerie. La surface d'intérêt 6 peut être une partie de l'échantillon 1, en particulier lorsque l'échantillon 1 est un objet tridimensionnel présentant un certain volume contenant plusieurs surfaces ou couches à plusieurs positions sur l'axe optique 5. Plus généralement, la surface d'intérêt 6 correspond à l'emplacement de la partie de l'échantillon 1 qu'on cherche à imager. Généralement, l'échantillon 1 repose sur un support 12, comme par exemple une lame de microscope, et la surface d'intérêt 6 peut avantageusement correspondre à l'interface 12a entre le support 12 et l'échantillon 1, ou bien encore à une surface parallèle à cette interface 12a comme dans l'exemple illustré, ou au moins dont la position peut être déduite de la position de l'interface 12a entre le support 12 et l'échantillon 1. Il est à noter que le choix de la surface d'intérêt 6 peut bénéficier d'une forme de connaissance a priori sur l'échantillon 1 et ce qu'on veut y observer, comme par exemple la taille de micro-organismes 15, en particulier de bactéries 15', présents dans l'échantillon 1 et susceptibles de reposer sur le support 12. Par convention, un repère (O, x, y, z) est défini avec pour origine l'intersection de l'axe optique 5 et la surface d'intérêt 6, pour axes orthogonaux (x,y) dans ladite surface 6 et l'axe z égal à l'axe optique 5 et orienté vers le capteur 2.

L'échantillon 1 comprend au moins un objet de calibration 10 qui se trouve à une position correspondant à la position de la surface d'intérêt 6. Un objet de calibration 10 présente une forme connue pouvant être décrite par des paramètres géométriques et un indice de réfraction. De préférence, l'échantillon 1 comprend plusieurs objets de calibration 10, au moins 3 objets de référence 10, et de préférence encore au moins 5 objets de calibration 10. S'il est possible que l'échantillon 1 contienne une multitude d'objets de calibration 10, il n'est généralement pas nécessaire d'avoir plus de 100 objets de calibration 10 apparaissant dans une image acquise. Plus particulièrement, le nombre d'objets de calibration dépend de la précision spatiale souhaitée pour la cartographie des aberrations.

EP 4 307 051 B1

Les paramètres caractérisants associés aux objets de calibration 10 comprennent au moins des paramètres de position localisant individuellement chacun des objets de calibration 10, typiquement des coordonnées de position. On entend par position d'un objet de référence 10 la disposition spatiale dudit objet de référence 10, incluant sa localisation et son éventuelle inclinaison, dans le système d'imagerie. De préférence, les paramètres caractérisants associés aux objets de calibration 10 comprennent également des paramètres géométriques décrivant la forme connue des objets de calibration 10. Les paramètres géométriques correspondent à une connaissance a priori de la forme géométrique des objets de calibration 10. A cet égard, les objets de calibration 10 présentent une forme géométrique simple, et de préférence, un objet de calibration 10 a une forme sphérique, cylindrique ou ellipsoïdique de manière à pouvoir utiliser des approches de reconstruction 3D dite paramétriques comme cela sera détaillé ci-dessous. Dans le cas d'un objet de calibration 10 ayant une forme sphérique, les paramètres géométriques pourront simplement être constitués par le rayon r d'une sphère modélisant l'objet de calibration 10, les coordonnées de position correspondant alors à la position du centre de cette sphère. Plus généralement, les paramètres sont ceux pris en compte par le modèle de diffraction de la lumière qui sera utilisé (par exemple le modèle de Mie, le modèle de Mie généralisé, le modèle de Thompson ou le modèle de Rayleigh). Ainsi, pour un objet de calibration 10 globalement sphérique, le modèle de diffraction de la lumière de Mie (ou solution de Lorenz-Mie) ne requiert que le rayon de la sphère en tant que paramètre géométrique. Dans le cas d'un objet de calibration 10 avec une forme globalement cylindrique, un rayon et une longueur constituent les seuls paramètres géométriques nécessaires pour décrire la forme. Par conséquent, tous les paramètres géométriques des objets de calibration 10 n'ont pas à être connus, mais uniquement ceux correspondant à une approximation de la forme des objets de calibration 10 et qui sont utilisés par le modèle de diffraction de la lumière.

La taille de l'objet de calibration 10 peut être choisie dans une gamme large, et peut par exemple présenter un diamètre (plus grande dimension) allant de 10 nm à 100 $\mu$m. Le choix de la taille de l'objet de calibration 10 est plutôt conditionné par des aspects secondaires. D'une part, la taille de l'objet de calibration 10 doit permettre de générer un contraste suffisant, en prenant en compte la longueur d'onde de la lumière d'illumination, la différence d'indice avec le milieu autour de l'objet de calibration 10, voire le contraste généré par d'autres objets dans l'image holographique. Le diamètre de l'objet de calibration 10 est ainsi de préférence supérieure à 10 nm, et de préférence encore supérieur à 100 nm. D'autre part, la surface projetée des objets de calibration 10 sur le capteur d'images 2 ne doit pas être trop importante de manière à ne pas altérer la qualité de l'image holographique. Typiquement, une surface projetée inférieure à 10 % (et de préférence encore inférieure à 1%) permettra une bonne qualité d'image holographique, si par ailleurs le reste de l'échantillon 1 n'est pas trop dense. En outre, les objets de calibration 10 ne doivent pas masquer le reste de l'échantillon 1, et notamment la surface d'intérêt 6. La taille des objets de calibration 10 est donc choisie afin de ne pas occuper trop d'espace dans le champ de vue du capteur d'images 2. A cet égard, les objets de calibration 10 sont de préférence distants les uns des autres, et non pas adjacents, et sont de préférence répartis sur tout le champ de vue du capteur d'images 2, de manière éparse.

Un objet de calibration 10 présente, comme tout matériau, un indice de réfraction. Dans la mesure où l'objet de calibration 10 est distinct du reste de l'échantillon 1, son indice de réfraction diffère du milieu qui l'entoure, même très faiblement. Ainsi, un indice de réfraction d'un objet de calibration 10 qui diffère de 0,01 de l'indice de réfaction du milieu environnant l'objet de calibration 10 permet d'identifier son impact sur la diffraction lumineuse dans une image acquise, et permet donc de mettre en œuvre la méthode. De préférence toutefois, l'indice de réfraction de l'objet de référence 10 diffère d'au moins 0,05 par rapport à l'indice de réfaction de la partie de l'échantillon 1 immédiatement adjacente à l'objet de calibration 10, et de préférence encore d'au moins 0,1. L'indice de réfraction de l'objet de calibration 10 est de préférence connu et renseigné dans le modèle de diffraction de la lumière. En particulier, dans le cas où l'objet de calibration 10 est opaque, c'est-à-dire que la composante complexe de son indice de réfraction peut être considérée comme tendant vers l'infini à la longueur d'onde considérée, le modèle de diffraction de la lumière peut être modifié en conséquence afin de limiter le nombre de paramètres à ajuster pour diminuer le temps de calcul, et éviter un éventuel sur-ajustement. Dans le cas d'un objet de calibration 10 transparent ou partiellement transparent, l'indice de réfraction de l'objet de calibration 10 peut également être inconnu, ou connu de façon imprécise, et peut être estimé de la même manière que les paramètres géométriques ou de position associés à l'objet de calibration 10, via l'utilisation du modèle de diffraction, et faire ainsi parti des paramètres caractérisants associés à l'objet de calibration 10.

En se référant à la figure 2, l'échantillon 1 peut comprendre un milieu d'immersion 14, notamment du glycérol lorsque le système d'acquisition 8 comprend un microscope à immersion et le modèle de diffraction de la lumière peut impliquer un indice de réfraction dudit milieu d'immersion 14.

En dehors du fait que l'objet de calibration 10 doit présenter une forme connue décrite par des paramètres caractérisants qui lui sont associés, ou alors une très petite taille par rapport à longueur d'onde de la lumière d'illumination, peu de contraintes pèsent sur le choix d'un objet de calibration 10. Un objet de référence 10 peut être opaque ou transparent, et peut être constitué de matières variées, comme par exemple la silice, le polystyrène, ou un métal tel que l'or. Au regard des considérations ci-dessus, un objet de calibration 10 peut être un objet artificiel ajouté à l'échantillon 1. L'avantage d'ajouter un objet de calibration artificiel réside principalement dans la connaissance fine de ses paramètres géométriques et de son indice de réfraction, ainsi que dans la régularité de sa forme. En cas d'objets de calibration 10 artificiels ajoutés à l'échantillon 1, ceux-ci sont choisis pour présenter une forme simple et régulière, de préférence cylindrique ou ellipsoïdique, et de préférence encore une forme sphérique, afin de permettre la meilleure adéquation entre la forme réelle de l'objet de calibration 10 et son approximation décrite par les paramètres caractérisants pris en compte par le modèle de diffraction. Par exemple, dans le cas illustré dans la Figure 2, les objets de calibration 10 sont des billes de polystyrène, opaques, d'un diamètre de 1 $\mu$m.

L'objet de calibration 10 peut également être présent sur le support 12 de l'échantillon 1, faisant partie du support 12 au niveau de son interface avec l'échantillon 1. Il est par exemple possible de graver, par exemple par photolithographie, la surface 12a du support 12 pour y faire apparaître des formes, de préférence arrondies, pouvant répondre aux exigences d'un objet de calibration (nervures arrondies par exemple).

Ainsi qu'évoqué précédemment, l'objet de calibration 10 se trouve à une position en correspondance avec la position de la surface d'intérêt 6, c'est-à-dire qu'il existe une relation de correspondance entre la position de la surface d'intérêt 6 et la position de chaque objet de calibration 10. Par exemple, la masse volumique des objets 10 est choisie de sorte qu'ils se déposent sur le support 12. La surface d'intérêt 6 à imager est alors définie par le plan passant par les centres des objets 10 lorsque ces derniers sont des billes calibrées. On notera qu'il est également possible de mettre en œuvre l'invention pour des objets de calibration en suspension dans le milieu 14.

Si certaines configurations ne posent aucun problème, comme par exemple lorsque la surface d'intérêt 6 coïncide avec une surface du support 12 sur laquelle sont formés des objets de calibration 10, d'autres configurations peuvent parfois nécessiter de prendre des précautions afin de s'assurer de la correspondance entre la position d'un objet de calibration 10 et la surface d'intérêt 6. Lorsque la surface d'intérêt 6 coïncide avec la surface 12a du support 12, ou est liée à cette surface 12a du support 12 par exemple par une relation de parallélisme, il est possible de déposer les objets de calibration 10 directement sur la surface 12a du support 12 avant la mise en place du reste de l'échantillon 1 sur le support 12. Ainsi, un milieu d'immersion 14 fluide (par exemple de l'eau) contenant les objets de calibration 10 en suspension peut être préalablement déposé sur la surface 12a du support 12 avant la mise en place du reste de l'échantillon 1.

Une fois l'échantillon 1 mis en place, l'échantillon 1 est illuminé 17, et le capteur d'images 2 acquiert au moins une image holographique bidimensionnelle. Il peut s'agir d'une image acquise de façon isolée, ou d'une série d'images, et en particulier d'une série d'images holographiques acquises pour différentes positions du plan d'acquisition 2' relativement à l'échantillon 1 le long de l'axe optique 5 et/ou avec des longueurs d'onde différentes pour la lumière d'illumination.

Ces différentes positions du plan d'acquisition 2' relativement à l'échantillon 1 peuvent être obtenues par différentes positions de l'échantillon 1 le long de l'axe optique 5 relativement au capteur d'images 2, par exemple en déplaçant le capteur d'images 2, par exemple via un rail motorisé ou une platine motorisée.

De même que tout type de système d'imagerie holographique peut être utilisé comme évoqué plus haut, diverses techniques d'acquisition d'images holographiques peuvent être utilisées, dès lors que l'image acquise fait apparaître les effets optiques de la présence des objets de référence 10 dans le champ de vue du capteur d'images numérique2, et en particulier les figures d'interférence générées par les interférences entre la lumière d'illumination et la lumière

diffusée par les objets de référence 10, apparaissant dans l'image holographiques comme des motifs d'interférence causés par l'objet de référence. Il va sans dire toutefois que l'image est acquise avec le système d'imagerie holographique dans une configuration adaptée pour imager les objets de calibration 10 (ou plutôt les motifs d'interférence causés par ceux-ci), et donc avec les réglages adéquats (illumination, etc.) courants pour l'homme du métier.

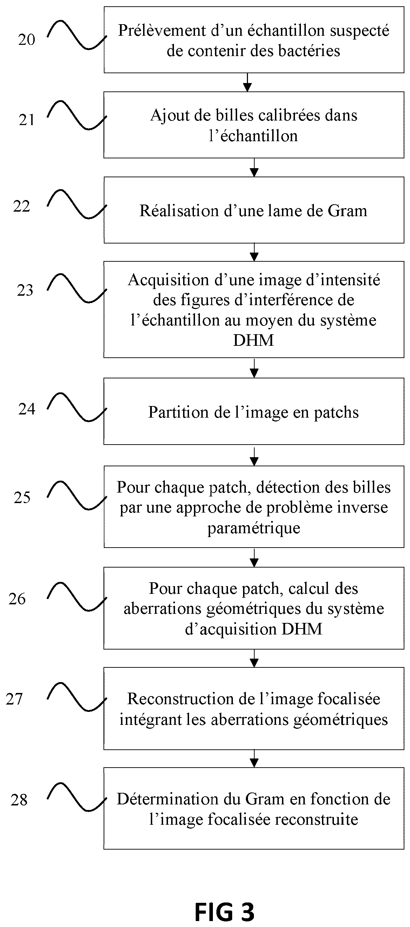

Un exemple du procédé selon l'invention appliqué à la détermination du Gram de microorganismes, en particulier des bactéries, présents dans un échantillon biologique est à présent décrit en relation avec la figure 3.

Le procédé de détermination du Gram de bactéries débute, en 20, par le prélèvement d'un échantillon biologique suspecté de contenir des microorganismes, notamment des bactéries, des levures ou des champignons. L'échantillon peut être de tout type, par exemple un échantillon prélevé sur un patient ou sur un animal, un échantillon prélevé sur un produit cosmétique ou sur un produit alimentaire, ou un échantillon environnemental (eau, sol, air...).

A cet échantillon sous forme liquide, est alors ajouté en 21 des billes faisant office d'objets de calibration pour la correction des aberrations géométriques impactant la formation des figures d'interférence acquises par le système d'acquisition DHM 8. Pour une réalisation correcte de cette correction, l'échantillon est avantageusement une suspension colloïdale stable pour éviter l'agrégation des billes avant le dépôt de l'échantillon biologique sur une lame de microscope. De manière avantageuse :

  i. La taille et l'indice de réfraction des billes sont en outre choisis de sorte à présenter une variation limitée, de préférence inférieure à 50%. Comme cela sera décrit ci-après, cette limitation permet une identification automatique efficace des billes dans les images DHM acquise, et permet donc une automatisation complète du procédé selon l'invention.

  ii. Les billes ne doivent pas être trop similaires aux objets attendus dans l'échantillon afin de limiter le risque de confusion avec ces objets. En particulier, dans le cas, fréquent en microbiologie, ou des objets biologiques quasi-sphériques et de taille comparable à la bille pourraient être présents (par exemple des coques), les indices des billes et celui des microorganismes diffèrent suffisamment, ce qui peut se faire par exemple par le truchement du choix du matériau des billes (p. ex. un métal), ou par celui de la coloration des microorganismes (composante complexe de l'indice de réfraction non nulle dans certaines longueurs d'ondes).

iii. La taille de la bille est suffisamment grande pour diffuser suffisamment la lumière incidente (d'après la loi de Rayleigh, des particules très petites diffusent peu la lumière, selon une loi en 1/r^4) pour former une figure d'interférence suffisamment contrastée sur le plan du capteur 2. Elle doit être par ailleurs suffisamment petite pour permettre une diffusion dans un angle suffisamment large (selon la loi de Mie), et éviter d'occuper une part trop importante du champ. En pratique, une bille de quelques dizaines de nm à quelques dizaines de $\mu$m convient, avec une préférence dans la zone de quelques centaines de nm à quelques $\mu$m.

iv. La concentration surfacique de billes déposées sur la lame de microscope découle du volume déposé, de la concentration initiale de billes et de leur état d'agrégation éventuels, est choisie judicieusement. Si après dépôt la concentration surfacique de billes est trop faible, on risque de ne pas en avoir dans le champ, ou pas suffisamment pour réaliser une cartographie correcte. Inversement, si celle-ci est trop élevée, elles vont diffuser trop la lumière incidente, réduire le rapport signal sur bruit des objets d'intérêt et introduire des artefacts dans la reconstruction. En pratique, 3 à 300 billes en moyenne par champ est une zone de fonctionnement, avec une préférence pour 5 à 30 comme décrit ci-dessous.

v. La forme de l'objet calibrant doit permettre la mise en œuvre d'un modèle direct de diffusion de la lumière. Une bille étant sphérique, on est dans le cas relativement simple où le modèle de Lorenz-Mie s'applique, mais si nécessaire d'autres modèles de diffusion existent pour des objets plus complexes, comme décrit par exemple dans l'article de Gouesbet, G. & Mees, L. Generalized Lorenz-Mie theoryfor infinitely long elliptical cylinders. JOSA A 16, 1333-1341 (1999).

Le procédé se poursuit, en 22, par la réalisation d'une lame de Gram d'une manière connue en soi. Une fois l'échantillon séché, du glycérol est ajouté sur la lame de microscope, le microscope immergé dans le glycérol et une ou plusieurs images DHM sont acquises en 23.

L'image DHM acquise est alors avantageusement découpée, en 24, en plusieurs sous-images, ou « patchs », de manière à obtenir une correction des aberrations du système d'acquisition 8 variable dans le champ de vision de ce dernier.

Le procédé se poursuit, en 25, par une caractérisation approximative des positions et des caractéristiques géométriques et d'indices des billes 10 dans chaque patch en mettant en œuvre une reconstruction de l'image focalisée des billes 10 à l'aide d'un propagateur non corrigé des aberrations. Cette étape, optionnelle, a pour principal objectif de caractériser de manière approximative l'espace de recherche décrit ci-après, notamment d'identifier les zones dans lesquelles les optima locaux recherchés se situent afin d'accélérer le temps de calcul. Cette étape permet ainsi une mise en œuvre en (quasi) temps réel du procédé selon l'invention et/ou l'emploi de ressources informatiques limitées. Si le procédé selon l'invention utilise des ressources informatiques importantes, comme par exemple une architecture réseau composée d'un nombre suffisant de nœuds de calcul pour le temps de calcul visé, des hypothèses *a priori* sur l'espace de recherche peuvent être déterminées et l'étape 25 omise.

L'étape 25 repose avantageusement sur une approche paramétrique de reconstruction des billes rendue possible par le choix de la géométrie des objets de calibration. La reconstruction utilise un propagateur de Lorenz-Mie, par exemple celui décrit dans l'article de Slimani, Farid et al. Near-fieldLorenz-Mie theory and its application to microholography », Applied Optics (1984). Dans une première itération, un problème d'optimisation selon la relation suivante est mis en œuvre :

$$v^t = \arg\min_{v \in D} \left\| d - m^{Mie}(v) \right\|_{2,W}^2 \qquad (1)$$

relation dans laquelle :

- $v = (x\,y\,z\,r\,n)$ caractérise la position (x, y, z) dans un repère dont l'origine est égale à l'intersection entre l'axe optique 5 et le plan du capteur 2, r est le rayon des billes et n est leur indice de réfraction ;
- $m^{Mie}(v)$ est le modèle de Lorenz-Mie appliqué à une bille ;
- $d$ est l'image d'intensité du patch considéré ;
- $\|.\|_{2,W}$ la norme des moindres carrés pondérée par l'inverse de la matrice de covariance du bruit. Ce bruit peut être caractérisé *a priori* pour améliorer les performances de la détection (e.g. le bruit du capteur, les pixels morts, etc). Par défaut le bruit est considéré comme uniforme et égal à un bruit blanc Gaussien ;

- *D* est un domaine de recherche avantageusement limité aux caractéristiques des billes qui sont calibrées. Notamment l'espace de recherche est limité dans ses variables *r* et *n* à l'espace $[r_0 - \Delta r; r_0 + \Delta r] \times [n_0 - \Delta n; n_0 + \Delta n]$ où $r_0$ et $n_0$ sont respectivement les valeurs nominales du rayon et de l'indice de réfraction des billes, et $\Delta r$ et $\Delta n$ sont respectivement leur dispersion, ces données étant par exemple fournies par le fabriquant des billes. De préférence l'indice des billes, et plus généralement des objets de calibration, est connu avec une incertitude $\Delta n$ de $\pm$ 2%. Dans la première itération, l'espace de recherche spatial (x, y, z) est limité au champ de vision du système d'acquisition correspondant au patch considéré et à une profondeur z approximative correspondant à l'échantillon 1.

Le modèle étant invariant par translation en (x, y), la résolution de ce problème revient à trouver un maximum de corrélation entre le modèle et les données dans le plan (x, y), pour chaque sous-jeu de paramètres (z, r, n). Pour une résolution efficace du problème selon la relation 1, l'algorithme LINCOA décrit dans le document J. Nocedal and S. Wright, Numerical optimization. Springer Science & Business Media, 2006 est préféré.

A l'issue de cette première itération, si les résidus sont inférieurs à un seuil prédéterminé, par exemple quantifié par la norme des moindres carrés, alors une première bille de caractéristiques $v^t$ est identifiée à la position $(x^t y^t z^t)$ avec un rayon $r^t$ et un indice $n^t$. Le choix de billes ayant un indice de réfraction différent des objets attendus dans l'échantillon biologique, le problème d'optimisation (1) permet d'identifier la bille parmi les autres objets. A l'issue de cette première itération, la figure d'interférence correspondant à la bille identifiée est soustraite du patch, puis un nouveau problème d'optimisation selon la relation (1) avec le patch éliminé de la figure d'interférence est mis en œuvre. Ce processus itératif continue tant qu'une nouvelle bille est détectée. Une fois le processus stoppé pour ce patch, l'étape 25 est mise en œuvre pour le patch suivant jusqu'à avoir parcouru tous les patchs. Pour une détection approximative des billes, on pourra également se référer à la méthode décrite dans l'article de Soulez, F., Denis, L., Fournier, C., Thiébaut, É. & Goepfert, C. Inverse-problem approach for particle digital holography: accurate location based on local optimization. JOSA A 24, 1164-1171 (2007).

Après avoir mis en œuvre l'étape 25, on aboutit donc à une évaluation grossière de leurs paramètres de position, de rayon et d'indice de réfraction.

Le procédé selon l'invention se poursuit, pour chaque patch, par le calcul 26 des aberrations impactant les figures d'interférences des billes.

Comme cela est connu en soi, la reconstruction d'une image focalisée de la surface d'intérêt 6 consiste à trouver la fonction de transmittance $\underline{t}(x, y)$ de cette surface correspondant à un minimum local du problème d'optimisation suivant :

$$\underline{t}^t = \underset{\underline{t}}{argmin}\left\|d - m^{NP}(\underline{t})\right\|_{2,W}^2 \qquad (2)$$

$$m^{NP}(\underline{t}) = \left|\underline{t} * \underline{h}_{z^6}^{NP}\right|^2 \qquad (3)$$

où * est la convolution et $\underline{h}_{z^6}^{NP}$ est un propagateur à la distance $z^6$ entre la surface d'intérêt 6 et le plan du capteur 2, ce propagateur est choisi en fonction de l'application visée. Comme rappelé ci-dessus, les propagateurs de l'état de la technique ne prennent pas en compte les aberrations, de quelque nature que ce soit, impactant les figures d'interférence enregistrées par le capteur 2.

Selon un mode de réalisation privilégié, l'invention se propose :

1. de modifier le propagateur $\underline{h}_{z^6}^{NP}$ selon l'état de la technique par un propagateur $\underline{h}_{z^6}^{INV}$ selon la relation :

$$\underline{h}_{z^6}^{INV} = \underline{h}_{z^6}^{NP} * p(x, y) \qquad (4)$$

où $p(x, y)$ est une fonction quantifiant les aberrations géométriques sur les figures d'interférence dans le plan du capteur 2, ci-après nommée « fonction d'aberration ».

2. de décrire la fonction $p(x, y)$ dans une base fréquentielle choisie en fonction du système d'acquisition DHM telle que :

$$F_{K_x,K_y}\left(p(x, y)\right) = P\left(K_x, K_y, \alpha\right) = e^{i\left(\sum_i \alpha_i \times b_i\left(K_x, K_y\right)\right)} \qquad (5)$$

Où $F_{K_x,K_y}$ est la transformée de Fourier, $K_x$ et $K_y$ étant les coordonnées fréquentielles dans le domaine de Fourier, $b = \{b_i(K_x, K_y)\}_i$ sont les éléments de la base fréquentielle et $\alpha = \{\alpha_i\}_i$ sont les coordonnées de la fonction $F_{K_x,K_y}(p(x, y))$ dans la base $b$. De manière avantageuse, comme cela sera décrit ci-après, la base $b$ est celle des polynômes de Zernike $Z_n^m(K_x, K_y)$ qui sont particulièrement bien adaptés pour capturer, dans le domaine fréquentiel, les aberrations géométriques des systèmes optiques invariants en première approximation autour de l'axe optique. De tels polynômes sont décrits par exemple dans l'article de Zheng, G., Ou, X., Horstmeyer, R. & Yang, C. Characterization of spatially varying aberrations for wide field-of-view microscopy. Opt. Express 21, 15131-15143 (2013). D'autres polynômes sont possibles, par exemple les polynômes de Legendre.

3. de calculer les coordonnées $\{\alpha_i\}_i$ de la fonction $F_{K_x,K_y}(p(x, y))$ conjointement avec le vecteur $v = (x\,y\,z\,r\,n)$ des billes de calibration en utilisant un propagateur paramétrique $\underline{h}_{Z^6}^{NP}$ dont le principal avantage est de fournir une recherche dans l'espace des solutions qui converge sans avoir à régulariser le problème d'optimisation, par exemple les polynômes de Legendre ou le propagateur de Lorenz-Mie appliqué aux billes. Notamment, il est ajusté un modèle de formation d'image holographique (par exemple le modèle de Lorentz-Mie) convolué avec le modèle des aberrations $p$ $(x, y)$ aux données pour chaque bille, les paramètres à ajuster étant les paramètres $(x\,y\,z\,r\,n)$ ainsi que les $\{\alpha_i\}_i$.

Plus particulièrement, l'étape 26 met en œuvre, pour chaque patch et pour chaque bille détectée dans le patch, le problème d'optimisation selon les relations :

$$\{v^t, \alpha^t\} = arg\,\min_{v\in D, \alpha\in C}\left\|d - \underline{m}(v, \alpha)\right\|_{2,W}^2 \tag{6}$$

$$m(v, \alpha) = \left|F_{x,y}^{-1}\left(p(K_x, K_y, \alpha)\odot F_{K_x,K_y}\left(m^{Mie}(v)\right)\right)\right|^2 \tag{7}$$

$$p(K_x, K_y, \alpha) = e^{i\left(\Sigma_{n,m}\left(\alpha_n^m\times Z_n^m(K_x,K_y)\right)\right)} \tag{8}$$

$$Z_n^m(K_x, K_y) = \begin{cases} \sqrt{\dfrac{2(n+1)}{1+\delta_{m,0}}}R_n^{|m|}(\rho)sin(m\phi) & si\,m > 0 \\[2mm] -\sqrt{2(n+1)}R_n^{|m|}(\rho)cos(m\phi) & sinon \end{cases} \tag{9}$$

$$\rho = \frac{\lambda}{NA}\sqrt{K_x^2 + K_x^2}$$
$$\phi = arctan\left(\frac{K_y}{K_y}\right) \tag{9}$$

$$n \in N \text{ et } m \in Z \text{ vérifiant } n \geq |m| \text{ et } n - |m| \in 2N$$

relations dans lesquelles :

- ⊙ est le produit d'Hadamard,
- $\underline{m}^{Mie}$ est le modèle de Lorenz-Mie appliqué à un bille,
- NA est l'ouverture numérique du système d'acquisition 8 et $\lambda$ la longueur d'onde de l'illumination ;
- $F_{x,y}^{-1}$ est la transformée de Fourier inverse,
- D est l'espace de recherche du vecteur $v = (x\,y\,z\,r\,n)$ de la bille considérée. Cet espace de recherche est avantageusement déterminé par les résultats de l'étape 25, e.g. $v^t \pm \Delta v^t$ avec $\Delta v^t/v^t < 0,1$. De préférence l'indice de réfraction des billes, et plus généralement des objets de calibration, est connu avec une incertitude $\Delta n$ de $\pm$ 2%.
- C est l'espace de recherche des coordonnées $\alpha = \{\alpha_n^m\}_{n,m}$ dans la base des polynômes de Zernike $Z_n^m$. Des études réalisées par les inventeurs montrent que pour un système d'acquisition DHM tel que décrit à la figure 1, les coefficients $\alpha_n^m$ sont compris entre -10 et 10, *C* étant de préférence limité à l'hypercube correspondant.

Les inventeurs ont constaté que la fonction $P(K_x, K_y, \alpha)$ est précisément déterminée par les 15 premiers polynômes de Zernike, le vecteur $\alpha = \{\alpha_n^m\}_{n,m}$ étant donc limité à ces derniers. Le coefficient $\alpha_0^0$ peut en outre être posé à 0 car le modèle est invariant par une translation de phase. Par ailleurs les coefficients $\alpha_1^{-1}\alpha_1^1$ peuvent également être posés à 0 pour maintenir la fonction d'étalement du point (ou « Point Spread Function », ou PSF, fonction qui décrit la réponse du système optique 8 à une source ponctuelle) centrée latéralement. Le problème d'optimisation ci-dessous comprend ainsi 12 paramètres ajustables pour le modèle d'aberrations rendant compte de différentes aberrations géométriques : astigmatisme oblique, coma horizontale et verticale, aberrations sphériques, et astigmatisme oblique secondaire. A ces 12 paramètres s'ajoutent les 5 paramètres du modèle de diffusion par la bille (3 paramètres spatiaux, rayon et indice). De préférence, la résolution du problème selon les relations (6-9) est réalisée par l'algorithme LINCOA ou d'autres algorithmes d'optimisation tels que celui décrit par M.J.D. Powell dans « On fast trust region methods for quadritic models with linear constraints », Report of the Department of Applied Mathematics and Theoretical Physics, Cambridge University, DAMTP 2014/NA02 (2014).

A l'issue de l'étape 26, il est donc obtenu une fonction d'aberration *p(x, y)* pour chaque position des figures d'interférence correspondant aux billes de calibration. Dans une première variante, une fonction par patch est retenue, par exemple en moyennant les fonctions *p(x, y)* dans ce patch. Dans une seconde variante, une fonction *p(x, y)* globale pour l'ensemble du champ de vision est déterminée par une interpolation des fonctions *p(x, y)* calculées sur tous les patchs.

Le procédé se poursuit, en 27, par la reconstruction d'une image refocalisée à partir de l'image DHM acquise au moyen d'un modèle de reconstruction intégrant les aberrations géométriques modélisées. Concernant la détermination du Gram de microorganismes, ces derniers ne sont pas connus à ce stade. Ils peuvent donc prendre différentes formes (coques ou bâtonnets par exemple), des tailles variables ou encore former des agrégats ou des chaînettes. De plus l'échantillon peut comprendre des objets divers (e.g. globules rouges). Il n'est donc pas fait d'hypothèse sur le contenu de l'échantillon de sorte qu'un propagateur non paramétrique est utilisé, par exemple un propagateur de Rayleigh-Sommerfeld $\underline{h}_z^{RS}(x, y)$. La reconstruction de la surface d'intérêt 6 est obtenue en résolvant le problème selon les relations :

$$\underline{t}^t(x, y) = arg \min_{\underline{t}(x,y)} \left( D^{NP} \left( \underline{t}(x, y), d(x, y) \right) + \mu R^{NP} \left( \underline{t}(x, y, z) \right) \right) \qquad (10)$$

$$D^{NP} \left( \underline{t}(x, y), d(x, y) \right) = \| d(x, y) - m^{NP}(v, \alpha) \|_W^2 \qquad (11)$$

$$m^{NP}(v, \alpha) = \underline{t} \ (x, y) * \underline{h}_z^{RS}(x, y) * p(x, y) \qquad (12)$$

$$\underline{h}_z^{RS}(x, y) = \frac{z}{i\lambda} \frac{exp\left( i \frac{2\pi}{\lambda} \sqrt{x^2 + y^2 + z^2} \right)}{x^2 + y^2 + z^2} \qquad (13)$$

relations dans lesquelles :

- $\mu$ est un scalaire prédéterminé ou bien un problème selon les relations précédentes est résolu pour chaque valeur d'un ensemble prédéterminé de scalaires ;
- $R^{NP}$ ($\underline{t}(x, y)$) est un terme de régularisation garantissant la convergence du problème d'optimisation, de préférence choisi en fonction d'informations *a priori* sur l'image reconstruite attendue, par exemple, dans le cas d'une lame de Gram qui est usuellement peu contrastée, la norme L1 du gradient de la fonction de transmittance $\underline{t}(x, y)$ ou la variation totale (« Total Variation ») telle que décrite dans l'article de F. Jolivet et al. « Regularized reconstruction of absorbing and phase object from a single in-line hologram, application to fluid mechanics and micro-biology », Opt. Express 26, 2018;
- la distance z est fixée à la moyenne des distances z calculées pour les billes à l'étape 26 ou bien plusieurs distances z sont choisies afin d'obtenir une pile d'images focalisées et donc plusieurs surfaces d'intérêt 6.

De préférence, la résolution du problème selon les relations (10-13) est réalisée par l'algorithme LINCOA ou l'algorithme de Powell par exemple.

Le procédé se poursuit, en 28, par l'analyse du ou des images focalisées reconstruites afin d'identifier les microorganismes qu'elles contiennent et leur Gram. Cette analyse est réalisée d'une manière connue en soi, par exemple par un technicien de laboratoire spécialiste du Gram qui analyse un écran sur lequel sont affichées la ou les images focalisées reconstruite, ou par l'utilisation d'outils informatiques de caractérisation automatique à base de machine learning. La détermination du Gram permet ensuite d'adapter l'antibiothérapie dans le cas d'un patient suspecté d'être infecté par une bactérie pathogène, ou de manière plus générale une thérapie antimicrobienne. La détermination du Gram permet également d'orienter le flux de travail

d'analyse microbiologique comme par exemple le choix d'un milieu de culture pour l'identification subséquente des microorganismes présents dans l'échantillon, le choix d'une carte utilisée pour la réalisation d'un antibiogramme par la plateforme Vitek®2 commercialisée par la société bioMérieux ou encore le choix de milieu utilisé pour la réalisation d'une identification par la plateforme Vitek®MS ou Vitek®MS PRIME commercialisées par la société bioMérieux.

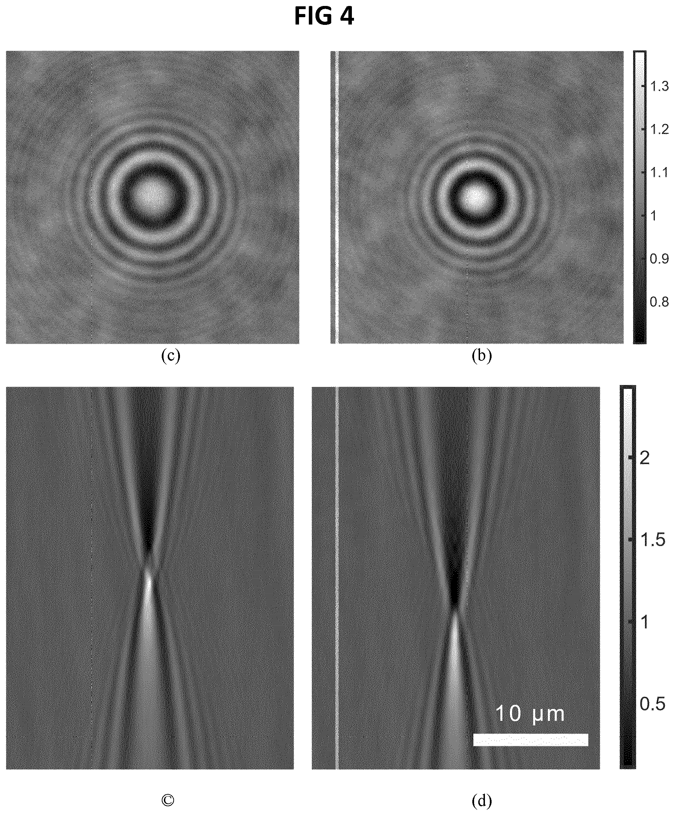

La figure 4 illustre l'effet des aberrations introduites par un système tel que décrit à la figure 1. La colonne de gauche illustre un système présentant un niveau d'aberration contenu et la colonne de droite un niveau d'aberration important. Comme cela est visible, les figures d'interférence, ici celles associées à une bille de calibration, sont fortement impactées tant dans le plan du capteur, que dans leur position selon l'axe optique. Les figures 5(a) et 5(b) illustrent respectivement l'amplitude et la phase reconstruites d'une portion de lame de Gram sans correction des aberrations selon l'invention et les figures 5(c) et 5(d) cette même portion de lame de Gram avec application de la correction des aberrations selon l'invention. La figure 6 illustre une image globale reconstruite au focus sans correction des aberrations (Figure 6(a)) et avec correction des aberrations (Figure 6(b)).

## EXTENSION DE L'ENSEIGNEMENT DU MODE DE REALISATION DETAILLE

Il a été décrit un mode de réalisation de l'invention appliqué à la détermination du GRAM de microorganisme. L'invention s'applique à tout type de caractérisation de microorganismes utilisant une holographie numérique en ligne, par exemple la détermination de la sensibilité de microorganismes à un agent antimicrobien tel que décrit dans la demande WO2017207184.

Plus généralement, l'invention s'applique à tout type de caractérisation, quelle que soit la nature de l'échantillon, biologique ou non, dès lors que l'on souhaite corriger les aberrations impactant la formation de figures d'interférence acquise par un système DHM.

Il a été décrit l'utilisation de billes pour la calibration. Tout type d'objet pouvant faire l'objet d'une reconstruction paramétrique par approche inverse peut convenir : cylindre, ellipsoïde, ...

Il a été décrit un microscope à immersion directe, sans lamelle, et sans bague de correction. Un échantillon recouvert d'une lamelle de microscope avec un microscope muni d'un collier de correction de l'épaisseur de ladite lamelle convient.

## EXTENSION DE L'ENSEIGNEMENT DU MODE DE REALISATION DETAILLE A PLUSIEURS LONGUEURS D'ONDE

Il a été décrit l'utilisation d'une seule longueur d'onde. Plusieurs longueurs d'onde peuvent aussi être utilisées pour caractériser un échantillon.

La manière la plus simple de traiter ce problème est de répéter le procédé de correction des aberrations pour chacune des longueurs d'ondes indépendamment. Une fonction quantifiant les aberrations $p(x, y)$ et une fonction de transmittance $\underline{t}^t(x, y)$ sont ainsi obtenues pour chaque longueur d'onde $\lambda$ d'un ensemble de longueurs d'onde $\Lambda$ pour lequel il est souhaité une correction des aberrations. Ces fonctions seront ci-après notées $p_\lambda(x, y)$ et $\underline{t}_\lambda^t(x, y)$ pour la longueur d'onde $\lambda$. Une correction efficace des aberrations chromatiques est ainsi obtenue.

Au-delà de ce traitement indépendant, et de manière avantageuse, la correction des aberrations chromatiques sur plusieurs longueurs d'onde peut être effectuée en tirant parti de l'argument physique que certaines caractéristiques des objets, en particulier la localisation et la géométrie, sont invariantes par rapport à la longueur d'onde. Deux méthodes selon l'invention permettent de réaliser cela, qui peuvent être utilisées indépendamment ou en combinaison :

1. On commence par fixer une des longueurs d'ondes comme référence (notée $\lambda_{ref}$ dans la suite) et on effectue les étapes 25 et 26 du procédé. On obtient ainsi la fonction quantifiant les aberrations $p_{\lambda_{ref}}(x, y)$, et aussi les caractéristiques des objets calibrants, en particulier leur localisation et leurs caractéristiques géométriques (par exemple leur rayon r pour des billes sphériques). Ensuite, pour chacune des autres longueurs d'onde, on effectue à nouveau les étapes 25 à 26, à ceci près que (i) les paramètres de localisation et géométriques ne sont plus ajustables, et sont fixés comme égaux à ceux obtenus avec $\lambda_{ref}$, (ii) les coefficients de Zernike $\alpha_1^{-1}$ et $\alpha_1^1$ sont maintenant des paramètres ajustables, non nécessairement nuls. On rend ainsi compte du fait que (i) les objets calibrants sont supposés immobiles et inchangés géométriquement entre deux longueurs d'ondes, et que (ii) le système ayant des aberrations chromatiques, leur image peut être translatée entre une longueur d'onde et une autre. On caractérise ainsi les aberrations chromatiques du système. On peut effectuer ensuite l'étape 27 indépendamment pour toutes les longueurs d'ondes, ou selon une autre méthode telle celle décrite ci-dessus. Notons enfin qu'il est possible, par une variante du procédé, de fixer davantage qu'une longueur d'onde comme référence, ce qui peut permettre d'ajuster plus précisément la localisation et les paramètres géométriques des objets calibrants (par exemple par le truchement d'une moyenne entre les paramètres obtenus aux différentes longueurs d'onde de référence).

2. On s'attend à ce que la localisation des objets dans le plan de transmittance, une fois les aberrations chromatiques corrigées (par exemple indépendamment pour chaque longueur d'onde, ou selon le procédé décrit en 1.) soit invariante entre les différentes longueurs d'onde. On peut avantageusement traduire cela dans les différents problèmes selon les relations (10)-(13) en définissant un terme de régularisation $\mu R^{NP}$ ($\underline{t}(x, y, z)$) partagé entre les différentes longueurs d'ondes, de manière à imposer une localisation identique des objets dans le plan de transmittance pour toutes les longueurs d'onde utilisées. On obtient ainsi une correction plus précise des aberrations. Avantageusement, le terme de régularisation commun aux différentes corrections est un terme promouvant la co-localisation des bords des fonctions de transmittance aux multi-longueur d'onde selon la relation :

$$R^{NP} = \sum_{x,y} \sqrt{\sum_{\lambda \epsilon \Lambda} \nabla_{x,y} \Re \left( \underline{t}_\lambda^t(x,y) \right)^2 + \nabla_{x,y} \Im \left( \underline{t}_\lambda^t(x,y) \right)^2 + \varepsilon^2} \qquad (14)$$

relation dans laquelle :

- $\Lambda$ est l'ensemble des longueurs d'onde utilisées ;
- $x$ et $y$ sont les coordonnées des pixels dans les fonctions de transmittance ;
- $\nabla_{x,y}$ est le symbole du gradient ;
- $\Re$ est la partie réelle d'une fonction ;
- $\Im$ est la partie imaginaire d'une fonction ;
- $\varepsilon$ est un scalaire positif de faible valeur ayant pour objectif de rendre la relation (14) différentiable et éviter une division par zéro dans le calcul de la dérivée du gradient.

## Revendications

1. Procédé de caractérisation de microorganismes présents dans un échantillon biologique comprenant :

    a. l'acquisition d'une image numérique holographique au moyen d'un dispositif d'acquisition en imagerie microscopique défocalisée avec une source de lumière cohérente ou partiellement cohérente, ledit dispositif étant configuré pour former sur un capteur d'image matriciel des figures d'interférence entre la source de lumière et la lumière diffractées par l'échantillon ;
    c. la génération informatique d'une image focalisée par l'application, à l'image numérique holographique, d'un modèle numérique de reconstruction d'une image focalisée ;
    d. la caractérisation des microorganismes en fonction de l'image focalisée,
    a.1. l'acquisition de l'image numérique holographique comporte la fourniture, dans le champ de vision du dispositif d'acquisition correspondant à ladite image, d'une pluralité d'objets de calibration distincts des micro-organismes présents dans l'échantillon biologique, lesdits objets

        - étant préalablement caractérisés en dimension et en indice de réfraction ;
        - ayant des dimensions choisies de manière à produire des figures d'interférence sur le capteur d'image matriciel ;
        - ayant une forme choisie de sorte que lesdites figures d'interférence sont calculables en utilisant un modèle de propagation de front d'onde intégrant des aberrations optiques du dispositif d'acquisition ;

    b. préalablement à la génération informatique de l'image focalisée, le procédé comporte :

- l'identification dans l'image numérique holographique des objets de calibration ;
- le calcul des figures d'interférence des objets de calibration par l'application du modèle de propagation de front d'onde, et la quantification des aberrations optiques du dispositif d'acquisition en fonction des figures d'interférence des objets de calibration dans l'image holographique et les figures d'interférence calculées ;

c.1. le modèle numérique de reconstruction de l'image focalisée intègre les aberrations optiques quantifiées,

dans lequel le calcul des aberrations est réalisée informatiquement par une approche paramétrique inverse utilisant la résolution d'un problème selon les relations suivantes pour obtenir une fonction de correction d'aberration $p(x, y)$:

$$\underline{t}^t = arg\min_{\underline{t}} \|d - m^{NP}(\underline{t})\|_2^2$$

$$m^{NP}(\underline{t}) = \left| \underline{t} * \underline{h}_{z^6}^{NP} * p(x,y) \right|^2$$

où $\underline{t}^t$ est une image refocalisée, $\underline{h}_{z^6}^{NP}$ est un propagateur paramétrique à la distance $z^6$ entre la surface d'intérêt (6) et le plan du capteur (2), tel que le modèle de Lorenz-Mie, d est l'image d'intensité d'un patch correspondant à la position des objets de calibration identifiés dans l'étape b, et $p(x, y)$ est la fonction de correction des aberrations.

2. Procédé selon la revendication 1, dans lequel les objets de calibration sont des sphères d'un rayon compris dans une gamme allant de 0,01 à 100 $\mu$m et d'une polydispersité inférieure à 50 % en coefficient de variation, de préférence inférieur à 25%, encore plus préférentiellement inférieur à 10%, l'indice de réfraction des objets de calibration étant avantageusement connu avec une incertitude de $\pm$ 2%.

3. Procédé selon la revendication 1 ou 2, dans lequel le modèle numérique de reconstruction de l'image focalisée utilise un propagateur modifié par la fonction de correction des aberrations.

4. Procédé selon l'une quelconque des revendications précédentes, dans lequel la fonction de correction des aberrations est une fonction selon les relations :

$$F_{K_x,K_y}(p(x,y)) = p(K_x, K_y, \alpha) = e^{i\left(\sum_i \alpha_i \times b_i(K_x,K_y)\right)}$$

où $F_{K_x,K_y}$ est la transformée de Fourier, $K_x$ et $K_y$ étant les coordonnées fréquentielles dans le domaine de Fourier, $b = \{b_i(K_x, K_y)\}_i$ sont les éléments de la base fréquentielle et $\alpha = \{\alpha_i\}_i$ sont les coordonnées de la fonction $F_{K_x,K_y}(p(x, y))$ dans la base b.

5. Procédé selon la revendication 4, dans lequel lors de la quantification des aberrations, les coordonnées $\{\alpha_i\}_i$ sont calculés conjointement avec un vecteur des paramètres des objets de calibration pris en compte par le propagateur paramétrique.

6. Procédé selon l'une des revendications 4 ou 5, dans lequel la base est celles de polynôme de Zernike.

7. Procédé selon la revendication 6, dans lequel la base des polynômes de Zernike est limitée aux 15 premiers polynômes de Zernike.

8. Procédé selon l'une quelconque des revendications précédentes, comprenant une étape préliminaire de localisation et de caractérisation approximative des objets de calibration à l'aide d'un modèle non corrigé des aberrations.

9. Procédé selon l'une quelconque des revendications précédentes, dans lequel la quantification des aberrations est réalisée sur plusieurs positions de l'image holographique.

10. Procédé selon l'une quelconque des revendications précédentes, dans lequel l'image holographique est découpée en une pluralité de patchs et dans lequel l'échantillon est préparé de sorte à avoir au moins un objet de calibration par patch, de préférence au moins 3 objets de calibration par patch.

**11.** Procédé selon la revendication 10, dans lequel un modèle de reconstruction est mis en œuvre par patch, ledit modèle incorporant les aberrations quantifiées pour ce patch.

**12.** Procédé selon l'une quelconque des revendications précédentes, dans lequel la reconstruction est réalisée au moyen d'une approche régularisée utilisant un modèle de propagation non paramétrique, notamment un modèle de Rayleigh-Sommerfeld.

**13.** Procédé selon l'une quelconque des revendications précédentes, dans lequel la correction des aberrations optiques est réalisée pour plusieurs longueurs d'onde.

**14.** Procédé selon la revendication 13, dans lequel un modèle d'aberrations optiques est calculé pour chaque longueur d'onde de la pluralité de longueurs d'onde en imposant une contrainte sur les paramètres de localisation et/ou géométriques des objets de calibration.

**15.** Procédé selon la revendication 13, dans lequel un modèle de reconstruction de l'image numérique intégrant les aberrations chromatiques est calculé pour chaque longueur d'onde de la pluralité de longueurs d'onde en imposant une contrainte sur les paramètres de localisation des objets, commune à l'ensemble de la pluralité de longueurs d'onde.

**16.** Système de caractérisation de microorganismes présents dans un échantillon biologique comprenant :

- un dispositif d'acquisition d'une image numérique holographique au moyen d'un dispositif d'acquisition en imagerie microscopique défocalisée avec une source de lumière cohérente ou partiellement cohérente, ledit dispositif étant configuré pour former sur un capteur d'image matriciel des figures d'interférence entre la source de lumière et la lumière diffractées par les microorganismes ;
- une unité informatique configurée pour réaliser

c. la génération informatique d'une image focalisée par l'application, à l'image numérique holographique, d'un modèle numérique de reconstruction d'une image focalisée ;
d. la caractérisation des bactéries en fonction de l'image focalisée,

a.1. l'acquisition de l'image numérique holographique comporte la fourniture, dans le champ de vision du dispositif d'acquisition correspondant à ladite image, d'une pluralité d'objets de calibration distincts des micro-organismes présents dans l'échantillon biologique, lesdits objets

- étant préalablement caractérisés en dimension et en indice de réfraction ;
- ayant des dimensions choisies de manière à produire des figures d'interférence sur le capteur d'image matriciel ;
- ayant une forme choisie de sorte que lesdites figures d'interférence sont calculables en utilisant un modèle de propagation de fronts d'onde intégrant des aberrations optiques du dispositif d'acquisition ;

b. préalablement à la génération informatique de l'image focalisée, le procédé comporte :

- l'identification dans l'image numérique holographique des objets de calibration ;
- le calcul des figures d'interférence des objets de calibration par l'application du modèle de propagation de front d'onde, et la quantification des aberrations optiques du dispositif d'acquisition en fonction des figures d'interférence des objets de calibration dans l'image holographique et les figures d'interférence calculées ;

c.1. le modèle numérique de reconstruction de l'image focalisée intègre les aberrations optiques quantifiées,

dans lequel le calcul des aberrations est réalisée informatiquement par une approche paramétrique inverse utilisant la résolution d'un problème selon les relations suivantes pour obtenir une fonction de correction d'aberration $p(x, y)$:

$$\underline{t}^t = arg\min_{\underline{t}} \|d - m^{NP}(\underline{t})\|_2^2$$

$$m^{NP}\left(\underline{t}\right) = \left|\underline{t} * \underline{h}_{z^6}^{NP} * p(x,y)\right|^2$$

où $\underline{t}$ est une image refocalisée, $\underline{h}_{z^6}^{NP}$ est un propagateur paramétrique à la distance $z^6$ entre la surface d'intérêt (6) et le plan du capteur (2), tel que le modèle de Lorenz-Mie, d est l'image d'intensité d'un patch correspondant à la position des objets de calibration identifiés dans l'étape b, et $p(x, y)$ est la fonction de correction des aberrations.

**17.** Système selon la revendication 13, dans lequel l'unité informatique est configurée pour mettre en œuvre un procédé selon l'une quelconque des revendications 2 à 15.

**18.** Produit programme d'ordinateur comprenant une mémoire informatique mémorisant des instructions lisibles par ordinateur pour la mise en œuvre des étapes b), c), c1) et d) d'un procédé selon l'une quelconque des revendications 1 à 15.

**Patentansprüche**

**1.** Verfahren zur Charakterisierung von Mikroorganismen, die in einer biologischen Probe vorhanden sind, umfassend:

a. das Aufnehmen eines digitalen holografischen Bildes mittels einer Aufnahmevorrichtung in der defokussierten mikroskopischen Bildgebung mit einer kohärenten oder teilweise kohärenten Lichtquelle, wobei die Vorrichtung dazu ausgestaltet ist, auf einem Matrix-Bildsensor Interferenzmuster zwischen der Lichtquelle und dem Licht zu bilden, die durch die Probe gestreut werden;
c. das rechnerische Erzeugen eines fokussierten Bildes durch das Anwenden eines digitalen Modells zur Rekonstruktion eines fokussierten Bildes auf das digitale holographische Bild;
d. das Charakterisieren der Mikroorganismen in Abhängigkeit von dem fokussierten Bild,
a.1. wobei das Aufnehmen des digitalen holographischen Bildes das Bereitstellen einer Mehrzahl von Kalibrierungsobjekten, die von den in der biologischen Probe vorhandenen Mikroorganismen verschieden sind, in dem dem Bild entsprechenden Sichtfeld der Aufnahmevorrichtung umfasst, wobei die Objekte

- zuvor im Hinblick auf Abmessungen und Brechungsindex charakterisiert werden;
- Abmessungen aufweisen, die so gewählt sind, dass Interferenzmuster auf dem Matrix-Bildsensor erzeugt werden;
- eine Form aufweisen, die so gewählt ist, dass die Interferenzmuster unter Verwendung eines Wellenfrontausbreitungsmodells, das optische Aberrationen der Aufnahmevorrichtung beinhaltet, berechenbar sind;

b. wobei das Verfahren vor dem rechnerischen Erzeugen des fokussierten Bildes umfasst:

- das Identifizieren der Kalibrierungsobjekte in dem digitalen holographischen Bild;
- das Berechnen der Interferenzmuster der Kalibrierungsobjekte durch das Anwenden des Wellenfrontausbreitungsmodells und das Quantifizieren der optischen Aberrationen der Aufnahmevorrichtung in Abhängigkeit von den Interferenzmustern der Kalibrierungsobjekte in dem holografischen Bild und den berechneten Interferenzmustern;

c.1. wobei das digitale Modell zur Rekonstruktion des fokussierten Bildes die quantifizierten optischen Aberrationen beinhaltet,

wobei das Berechnen der Aberrationen rechnerisch durch einen inversen parametrischen Ansatz ausgeführt wird, der die Lösung eines Problems gemäß den folgenden Gleichungen verwendet, um eine Aberrationskorrekturfunktion p(x,y) zu erhalten:

$$\underline{t}^t = \mathtt{ar}\ \underset{\underline{t}}{\mathtt{gmin}}\left\|d - m^{NP}\left(\underline{t}\right)\right\|_2^2$$

$$m^{NP}(\underline{t}) = \left| \underline{t} * \underline{h}_{z^6}^{NP} * p(x,y) \right|^2$$

wobei $t^t$ ein refokussiertes Bild ist, $\underline{h}_{z^6}^{NP}$ ein parametrischer Propagator im Abstand $z^6$ zwischen der Fläche von Interesse (6) und der Ebene des Sensors (2) wie das Lorenz-Mie-Modell ist, d das Intensitätsbild eines Patches ist, das der Position der im Schritt b identifizierten Kalibrierungsobjekte entspricht, und p(x,y) die Aberrationskorrekturfunktion ist.

2. Verfahren nach Anspruch 1, wobei die Kalibrierungsobjekte Kugeln mit einem Radius in einem Bereich von 0,01 bis 100 µm und einer Polydispersität von weniger als 50 % als Variationskoeffizient, bevorzugt weniger als 25 %, noch bevorzugter weniger als 10 % sind, wobei der Brechungsindex der Kalibrierungsobjekte vorteilhafterweise mit einer Unsicherheit von $\pm 2$ % bekannt ist.

3. Verfahren nach Anspruch 1 oder 2, wobei das digitale Modell zur Rekonstruktion des fokussierten Bildes einen durch die Aberrationskorrekturfunktion modifizierten Propagator verwendet.

4. Verfahren nach einem der vorhergehenden Ansprüche, wobei die Aberrationskorrekturfunktion eine Funktion gemäß den folgenden Gleichungen ist:

$$F_{K_x,K_y}\big(p(x,y)\big) = p\big(K_x, K_y, \alpha\big) = e^{i\left(\sum_i \alpha_i \times b_i(K_x,K_y)\right)}$$

wobei $F_{K_x,K_y}$ die Fourier-Transformation ist, $K_x$ und $K_y$ die Frequenzkoordinaten in dem Fourier-Bereich sind, $b = \{b_i(K_x, K_y)\}_i$ die Elemente der Frequenzbasis sind und $\alpha = \{\alpha_i\}_i$ die Koordinaten der Funktion $F_{K_x,K_y}(p(x,y))$ in der Basis b sind.

5. Verfahren nach Anspruch 4, wobei beim Quantifizieren der Aberrationen die Koordinaten $\{\alpha_i\}_i$ gemeinsam mit einem Vektor der Parameter der Kalibrierungsobjekte berechnet werden, die von dem parametrischen Propagator berücksichtigt werden.

6. Verfahren nach einem der Ansprüche 4 oder 5, wobei die Basis die des Zernike-Polynoms ist.

7. Verfahren nach Anspruch 6, wobei die Basis der Zernike-Polynome auf die ersten 15 Zernike-Polynome begrenzt ist.

8. Verfahren nach einem der vorhergehenden Ansprüche, umfassend einen vorherigen Schritt des Lokalisierens und approximativen Charakterisierens der Kalibrierungsobjekte mithilfe eines unkorrigierten Modells der Aberrationen.

9. Verfahren nach einem der vorhergehenden Ansprüche, wobei das Quantifizieren der Aberrationen an mehreren Positionen des holographischen Bildes ausgeführt wird.

10. Verfahren nach einem der vorhergehenden Ansprüche, wobei das holographische Bild in eine Mehrzahl von Patches zerteilt wird und wobei die Probe so vorbereitet wird, dass mindestens ein Kalibrierungsobjekt pro Patch erhalten wird, bevorzugt mindestens 3 Kalibrierungsobjekte pro Patch.

11. Verfahren nach Anspruch 10, wobei ein Modell zur Rekonstruktion pro Patch eingesetzt wird, wobei das Modell die für dieses Patch quantifizierten Aberrationen enthält.

12. Verfahren nach einem der vorhergehenden Ansprüche, wobei die Rekonstruktion mittels eines regularisierten Ansatzes unter Verwendung eines nicht-parametrischen Propagationsmodells, insbesondere eines Rayleigh-Sommerfeld-Modells, ausgeführt wird.

13. Verfahren nach einem der vorhergehenden Ansprüche, wobei die Korrektur der optischen Aberrationen für mehrere Wellenlängen ausgeführt wird.

14. Verfahren nach Anspruch 13, wobei ein Modell optischer Aberrationen für jede Wellenlänge der Mehrzahl von Wellenlängen berechnet wird, indem eine Beschränkung für die Lokalisierungs- und/oder geometrischen Parameter der Kalibrierungsobjekte vorgegeben wird.

**15.** Verfahren nach Anspruch 13, wobei ein Modell zur Rekonstruktion des digitalen Bildes, das die chromatischen Aberrationen beinhaltet, für jede Wellenlänge der Mehrzahl von Wellenlängen berechnet wird, indem eine Beschränkung für die Lokalisierungsparameter der Objekte vorgegeben wird, die der Gesamtheit der Mehrzahl von Wellenlängen gemeinsam ist.

**16.** System zur Charakterisierung von Mikroorganismen, die in einer biologischen Probe vorhanden sind, umfassend:

a. eine Vorrichtung zum Aufnehmen eines digitalen holografischen Bildes mittels einer Aufnahmevorrichtung in der defokussierten mikroskopischen Bildgebung mit einer kohärenten oder teilweise kohärenten Lichtquelle, wobei die Vorrichtung dazu ausgestaltet ist, auf einem Matrix-Bildsensor Interferenzmuster zwischen der Lichtquelle und dem Licht zu bilden, die durch die Mikroorganismen gestreut werden;

- eine Rechnereinheit, die dazu ausgestaltet ist, Folgendes auszuführen

c. das rechnerische Erzeugen eines fokussierten Bildes durch das Anwenden eines digitalen Modells zur Rekonstruktion eines fokussierten Bildes auf das digitale holographische Bild;
d. das Charakterisieren der Bakterien in Abhängigkeit von dem fokussierten Bild,
a.1. wobei das Aufnehmen des digitalen holographischen Bildes das Bereitstellen einer Mehrzahl von Kalibrierungsobjekten, die von den in der biologischen Probe vorhandenen Mikroorganismen verschieden sind, in dem dem Bild entsprechenden Sichtfeld der Aufnahmevorrichtung umfasst, wobei die Objekte

- zuvor im Hinblick auf Abmessungen und Brechungsindex charakterisiert werden;
- Abmessungen aufweisen, die so gewählt sind, dass Interferenzmuster auf dem Matrix-Bildsensor erzeugt werden;
- eine Form aufweisen, die so gewählt ist, dass die Interferenzmuster unter Verwendung eines Wellenfrontausbreitungsmodells, das optische Aberrationen der Aufnahmevorrichtung beinhaltet, berechenbar sind;

b. wobei das Verfahren vor dem rechnerischen Erzeugen des fokussierten Bildes umfasst:

- das Identifizieren der Kalibrierungsobjekte in dem digitalen holographischen Bild;
- das Berechnen der Interferenzmuster der Kalibrierungsobjekte durch das Anwenden des Wellenfrontausbreitungsmodells und das Quantifizieren der optischen Aberrationen der Aufnahmevorrichtung in Abhängigkeit von den Interferenzmustern der Kalibrierungsobjekte in dem holografischen Bild und den berechneten Interferenzmustern;

c.1. wobei das digitale Modell zur Rekonstruktion des fokussierten Bildes die quantifizierten optischen Aberrationen beinhaltet,

wobei das Berechnen der Aberrationen rechnerisch durch einen inversen parametrischen Ansatz ausgeführt wird, der die Lösung eines Problems gemäß den folgenden Gleichungen verwendet, um eine Aberrationskorrekturfunktion p(x,y) zu erhalten:

$$\underline{t}^t = \operatorname*{ar\ gmin}_{\underline{t}} \left\| d - m^{NP}(\underline{t}) \right\|_2^2$$

$$m^{NP}(\underline{t}) = \left| \underline{t} * \underline{h}_{z^6}^{NP} * p(x,y) \right|^2$$

wobei $t^t$ ein refokussiertes Bild ist, $\underline{h}_{z^6}^{NP}$ ein parametrischer Propagator im Abstand $z^6$ zwischen der Fläche von Interesse (6) und der Ebene des Sensors (2) wie das Lorenz-Mie-Modell ist, d das Intensitätsbild eines Patches ist, das der Position der im Schritt b identifizierten Kalibrierungsobjekte entspricht, und p(x,y) die Aberrationskorrekturfunktion ist.

**17.** System nach Anspruch 13, wobei die Rechnereinheit dazu ausgestaltet ist, ein Verfahren nach einem der Ansprüche 2 bis 15 zu implementieren.

**18.** Computerprogrammprodukt, umfassend einen Rechnerspeicher, der computerlesbare Anweisungen zur Implementierung der Schritte b), c), c1) und d) eines Verfahrens nach einem der Ansprüche 1 bis 15 speichert.

**Claims**

**1.** A method for characterizing microorganisms present in a biological sample, comprising:

a. acquiring a defocused digital holographic image by means of a microscopic imaging acquisition device with a coherent or partially coherent light source, said device being configured to form interference patterns on a matrix image sensor between the light source and the light diffracted by the sample;
c. computer generating a focused image by applying a digital model for reconstructing a focused image to the digital holographic image;
d. characterizing the microorganisms as a function of the focused image,
a.1. acquiring the digital holographic image includes providing, in the field of view of the acquisition device corresponding to said image, a plurality of calibration objects distinct from the microorganisms present in the biological sample, said objects

- being previously **characterized in** terms of size and in terms of refractive index;
- having dimensions that are selected so as to produce interference patterns on the matrix image sensor;
- having a shape that is selected such that said interference patterns can be computed using a wavefront propagation model integrating optical aberrations of the acquisition device;

b. before computer generating the focused image, the method comprises:

- identifying calibration objects in the digital holographic image;
- computing the interference patterns of the calibration objects by applying the wavefront propagation model, and quantifying the optical aberrations of the acquisition device as a function of the interference patterns of the calibration objects in the holographic image and the computed interference patterns;

c.1. the digital model for reconstructing the focused image integrates the quantified optical aberrations, wherein the computation of the aberrations is carried out computationally using a reverse parametric approach using the resolution of a problem according to the following relationships in order to obtain an aberration correction function $p(x, y)$:

$$\underline{t}^t = \underset{\underline{t}}{argmin} \left\| d - m^{NP}\left(\underline{t}\right) \right\|_2^2$$

$$m^{NP}\left(\underline{t}\right) = \left| \underline{t} * \underline{h}_{z^6}^{NP} * p(x, y) \right|^2$$

where $\underline{t}^t$ is a refocused image, $\underline{h}_{z^6}^{NP}$ is a parametric propagator at the distance $z^6$ between the surface of interest (6) and the plane of the sensor (2), like the Lorenz-Mie model, d is the intensity image of a patch corresponding to the position of calibration objects identified in step b, and $p(x, y)$ is the correction function of the aberrations.

**2.** The method as claimed in claim 1, wherein the calibration objects are spheres with a radius included in a range ranging from 0.01 to 100 $\mu$m and with a polydispersity of less than 50 % as a coefficient of variation, preferably less than 25 %, even more preferably less than 10 %, with the refractive index of the calibration objects being advantageously known with an uncertainty of $\pm$ 2 %.

**3.** The method as claimed in claim 1 or 2, wherein the digital model for reconstructing the focused image uses a propagator modified by the aberration correction function.

**4.** The method as claimed in any one of the preceding claims, wherein the aberration correction function is a function according to the relationships:

$$F_{K_x,K_y}\big(p(x,y)\big) = p\big(K_x, K_y, \alpha\big) = e^{i\left(\sum_i \alpha_i \times b_i(K_x,K_y)\right)}$$

where $F_{K_x,K_y}$ is the Fourier transform, $K_x$ and $K_y$ are the frequency coordinates in the Fourier domain, $b = \{b_i(K_x, K_y)\}_i$ are the elements of the frequency base and $\alpha = \{\alpha_i\}_i$ are the coordinates of the function $F_{K_x,K_y}(p(x, y))$ in the base $b$.

5. The method as claimed in claim 4, wherein, when quantifying the aberrations, the coordinates $\{\alpha_i\}_i$ are computed together with a vector of the parameters of the calibration objects taken into account by the parametric propagator.

6. The method as claimed in any of claims 4 or 5, wherein the base is the Zernike polynomials base.

7. The method as claimed in claim 6, wherein the Zernike polynomials base is limited to the first 15 Zernike polynomials.

8. The method as claimed in any one of the preceding claims, comprising a preliminary step of locating and approximately characterizing calibration objects using an uncorrected model of the aberrations.

9. The method as claimed in any one of the preceding claims, wherein quantifying the aberrations is carried out on multiple positions of the holographic image.

10. The method as claimed in any one of the preceding claims, wherein the holographic image is divided into a plurality of patches and wherein the sample is prepared so as to have at least one calibration object per patch, preferably at least 3 calibration objects per patch.

11. The method as claimed in claim 10, wherein a reconstruction model is implemented per patch, with said model incorporating the quantified aberrations for this patch.

12. The method as claimed in any one of the preceding claims, wherein the reconstruction is carried out by means of a regularized approach using a non-parametric propagation model, notably a Rayleigh-Sommerfeld model.

13. The method as claimed in any one of the preceding claims, wherein the correction of the optical aberrations is carried out for multiple wavelengths.

14. The method as claimed in claim 13, wherein a model of optical aberrations is computed for each wavelength of the plurality of wavelengths by imposing a constraint on the location and/or geometric parameters of the calibration objects.

15. The method as claimed in claim 13, wherein a model for reconstructing the digital image integrating the chromatic aberrations is computed for each wavelength of the plurality of wavelengths by imposing a constraint on the object location parameters, common to the entire plurality of wavelengths.

16. A system for characterizing microorganisms present in a biological sample comprising:

- a device for acquiring a defocused digital holographic image by means of a microscopic imaging acquisition device with a coherent or partially coherent light source, said device being configured to form interference patterns on a matrix image sensor between the light source and the light diffracted by the microorganisms;
- a computing unit configured to:

c. computer generate a focused image by applying a digital model for reconstructing a focused image to the digital holographic image;
d. characterize bacteria as a function of the focused image,

a.1. acquiring the digital holographic image includes providing, in the field of view of the acquisition device corresponding to said image, a plurality of calibration objects distinct from the microorganisms present in the biological sample, said objects

- being previously **characterized in** terms of size and in terms of refractive index;
- having dimensions that are selected so as to produce interference patterns on the matrix image sensor;
- having a shape that is selected such that said interference patterns can be computed using a wavefront propagation model integrating optical aberrations of the acquisition device;

b. before computer generating the focused image, the method comprises:

- identifying calibration objects in the digital holographic image;
- computing the interference patterns of the calibration objects by applying the wavefront propagation model, and quantifying the optical aberrations of the acquisition device as a function of the interference patterns of the calibration objects in the holographic image and the computed interference patterns;

c.1. the digital model for reconstructing the focused image integrates the quantified optical aberrations, wherein the computation of the aberrations is carried out computationally using a reverse parametric approach using the resolution of a problem according to the following relationships in order to obtain an aberration correction function $p(x, y)$:

$$\underline{t}^t = arg\min_{\underline{t}} \left\| d - m^{NP}(\underline{t}) \right\|_2^2$$

$$m^{NP}(\underline{t}) = \left| \underline{t} * \underline{h}_{z^6}^{NP} * p(x,y) \right|^2$$

where $\underline{t}^t$ is a refocused image, $\underline{h}_{z^6}^{NP}$ is a parametric propagator at the distance $z^6$ between the surface of interest (6) and the plane of the sensor (2), like the Lorenz-Mie model, d is the intensity image of a patch corresponding to the position of calibration objects identified in step b, and $p(x, y)$ is the correction function of the aberrations.

17. The system as claimed in claim 13, wherein the computing unit is configured to implement a method as claimed in any one of claims 2 to 15.

18. A computer program product comprising a computer memory storing computer-readable instructions for implementing steps b), c), c1) and d) of a method as claimed in any one of claims 1 to 15.

FIG 1

FIG 2

20 — Prélèvement d'un échantillon suspecté de contenir des bactéries

↓

21 — Ajout de billes calibrées dans l'échantillon

↓

22 — Réalisation d'une lame de Gram

↓

23 — Acquisition d'une image d'intensité des figures d'interférence de l'échantillon au moyen du système DHM

↓

24 — Partition de l'image en patchs

↓

25 — Pour chaque patch, détection des billes par une approche de problème inverse paramétrique

↓

26 — Pour chaque patch, calcul des aberrations géométriques du système d'acquisition DHM

↓

27 — Reconstruction de l'image focalisée intégrant les aberrations géométriques

↓

28 — Détermination du Gram en fonction de l'image focalisée reconstruite

**FIG 3**

**FIG 4**

(c)

(b)

(©)

(d)

10 µm

# FIG 5

(c)

(b)

©

(d)

# FIG 6

(a)

(b)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3252455 A
- FR 3111998
- WO 2017207184 A


**Littérature non-brevet citée dans la description**

- **MYUNG K.KIM**. Principles and techniques of digital holographic microscopy. *SPIE Reviews*, January 2010, vol. 1 (1)
- **N. WU et al.** Three-dimensional identification of microorganisms using a digital holographic microscope. *Computational and Mathematical Methods in Medicine*, vol. 2013
- **AHMED EL MALLAHI**. Automated threedimensional detection and classification of living organisms using digital holography microscopy with partial spatial coherent source: application to monitoring of drinking water resources. *Applied Optics*, January 2013, vol. 52 (1)
- **SOULEZ, F** ; **DENIS, L** ; **FOURNIER, C.** ; **THIÉBAUT, É.** ; **GOEPFERT, C**. Inverse-problem approach for particle digital holography: accurate location based on local optimization. *JOSA A*, 2007, vol. 24, 1164-1171
- **SOULEZ, F** ; **DENIS, L.** ; **THIÉBAUT, É** ; **FOURNIER, C.** ; **GOEPFERT, C**. Inverse problem approach in particle digital holography: out-of-field particle detection made possible. *JOSA A*, 2007, vol. 24, 3708-3716
- **ZHENG, G** ; **OU, X.** ; **HORSTMEYER, R.** ; **YANG, C.** Characterization of spatially varying aberrations for wide field-of-view microscopy. *Opt. Express*, 2013, vol. 21, 15131-15143
- **OLIVIER et al.** Effects of some model approximations in the reconstructions of digital in-line holograms: simulations, experiments on calibrated objects and model refinement assessment. *Proc. of SPIE*, vol. 12136
- **KUS et al.** Active limited-angle tomographic phase microscope. *Journal of Biomedical Optics*, November 2025, vol. 20 (11)
- **GOUESBET, G.** ; **MEES, L**. Generalized Lorenz-Mie theoryfor infinitely long elliptical cylinders. *JOSA A*, 1999, vol. 16, 1333-1341
- **SLIMANI, FARID et al.** Near-fieldLorenz-Mie theory and its application to microholography ». *Applied Optics*, 1984
- **J. NOCEDAL** ; **S. WRIGHT**. Numerical optimization. Springer Science & Business Media, 2006
- **SOULEZ, F** ; **DENIS, L.** ; **FOURNIER, C.** ; **THIÉBAUT, É.** ; **GOEPFERT, C**. Inverse-problem approach for particle digital holography: accurate location based on local optimization. *JOSA A*, 2007, vol. 24, 1164-1171
- **ZHENG, G.** ; **OU, X** ; **HORSTMEYER, R.** ; **YANG, C**. Characterization of spatially varying aberrations for wide field-of-view microscopy. *Opt. Express*, 2013, vol. 21, 15131-15143
- On fast trust region methods for quadritic models with linear constraints. **M.J.D. POWELL**. Report of the Department of Applied Mathematics and Theoretical Physics. Cambridge University, 2014
- **F. JOLIVET et al.** Regularized reconstruction of absorbing and phase object from a single in-line hologram, application to fluid mechanics and microbiology. *Opt. Express*, 2018, vol. 26